# EUROPEAN PATENT SPECIFICATION

(11) **EP 2 333 397 B1**
(45) Date of publication and mention of the grant of the patent: **20.03.2013**
(21) Application number: 09398019.1
(22) Date of filing: 11.12.2009
(51) Int. Cl.: F16N 11/08

(54) **Automatic lubricator**
Automatische Schmiervorrichtung
Lubrificateur automatique

(43) Date of publication of application: 15.06.2011
(73) Proprietor: Carfi - Fábrica de Plásticos e Moldes, SA, 2430 Marinha Grande (PT)
(72) Inventor: Gomes de Figueiredo, Carlos João, 2430-901 Vergieiras - Marinha Grande (PT)
(74) Representative: Ferreira, Maria Silvina

(56) References cited:
- EP-A1- 1 213 529
- WO-A1-2004/001279
- US-A- 5 271 528
- US-A- 6 125 969

## Description

### FIELD OF THE INVENTION:

The present invention describes an automatic lubricator. Specifically, this device is intended to periodically release a quantity of lubricant fluid, according to the operating period set in the equipment, from 2 weeks to 52 weeks, with weekly increments. The device also allows the reprogramming of the previously programmed timing. Another added value of the presented automatic lubricator is the guarantee that the lubricating fluid is not subjected to high pressure when the system is on stand-by, thereby maintaining the fluids properties unchanged.

### BACKGROUND OF THE INVENTION:

The development of this automatic lubricator is related to the need to develop a device to bridge the functional disadvantages, described in the text that follows, of same type of equipments already in market, as presented in the document EP 1 213 529.

Most lubricators on the market are made up of plastic materials not compatible with each other and some mixed with metallic components, difficulting the recycling process.

In the presented automatic lubricator, the mechanical components with the exception of electrical devices and some screws, are made of compatible plastic materials, uncontaminabled by lubricant fluid, provided that the fluids percentage is reduced. allowing the process of recycling plastics. These can be mixed and grinded at the same time, allowing the plastics recycling process. All electronic components and batteries will also have an appropriated recycling process.

When the lubricant fluid is composed of lubricant grease it's necessary to ensure that the piston does not put the lubrication circuit in high pressure, so it doesn't change the grease properties, for example: the separation between oil, which is about 90% of the contents, and the absorbent material contained in the grease, such as lithium and sodium bentonite. To reduce this effect we contemplate reversing the electric motors rotation direction in order to relieve the grease from high pressure after an injection, through pistons withdraw. Lubricators are currently limited to inject the lubricant fluid without withdrawing the piston, thereby, the fluid is under high pressure over an extended period of time. The frequency in which a given amount of lubricant fluid is injected, is time variable, and depends on the characteristics of the mechanism to be lubricated. Considering the lubricator reservoirs dispensage in quantities that meet the lubrication mechanism needs, it's possible that the operations perfect period does not match with a known time unit. Therefore this lubricator contemplates operation period adjustment in weekly increments, to improve the lubricant fluid dispensing for a given mechanism. In general, the existent lubricators include monthly programmable periods.

In addition to the devices operation setting period it can be reprogrammed, if it is not well adapted to the needs of the mechanism to lubricate. The electromechanical automatic lubricators are not currently allowing that functionality. Most of the existing electromechanical lubricators use manufacturer exclusive batteries with specific formats, to put the equipment in operation, which requires the user to buy batteries from the product manufacturer. The lubricator developed uses two lithium AA batteries 1.5 Volt each, facilitating the exchange of the same, provided that the replacement batteries have the equivalent characteristics to the originals.

### BRIEF DESCRIPTION OF THE DRAWINGS:

The operation and advantages of this invention will become clear with the detailed description that follows. To help understand the systems operation, the descriptions below have references to details in the showed pictures:

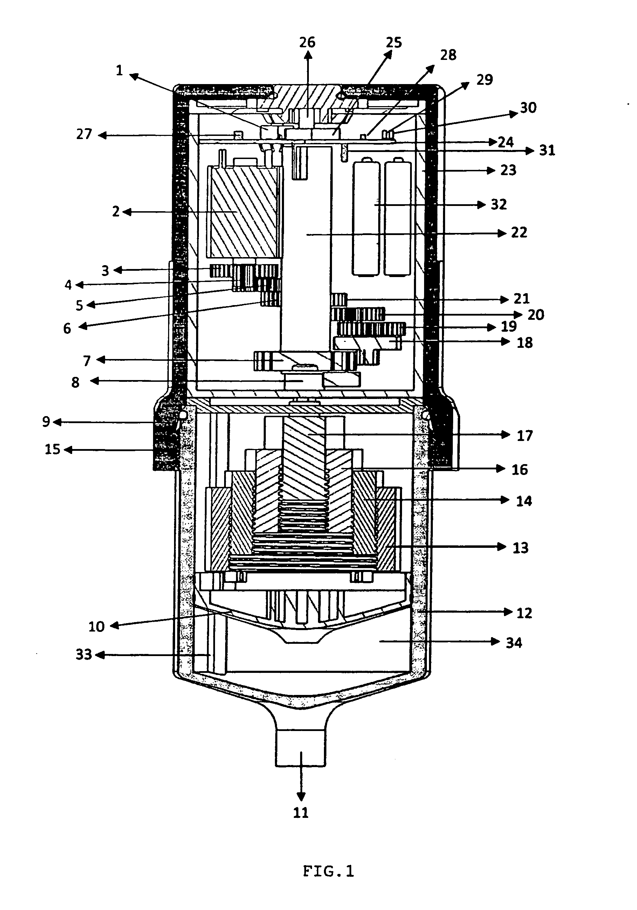

FIG.1 - Vertical section cut of the present invention;
FIG.2 - View of the present invention user interface;
FIG.3 - Planar view profile of the alignment guides, the telescopical system and the piston of the present invention.

### SPECIFIC DESCRIPTION OF THE INVENTION:

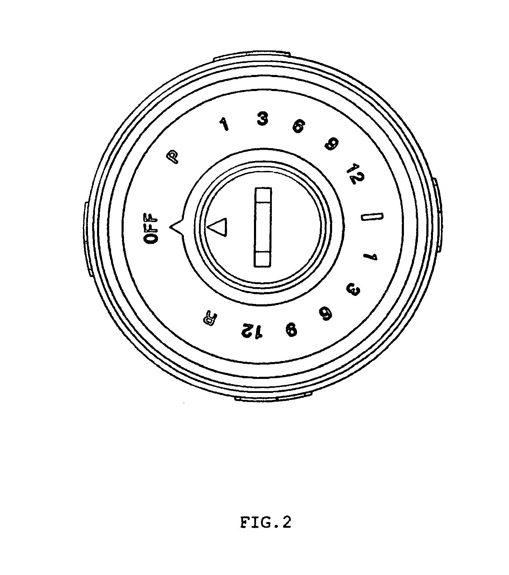

In picture 1 is possible to identify the several mechanical, electronics 24 and electrics systems and components automatic lubricator24. Starting from the initial OFF position when the rotary programmer 26, shown in Figure 2, is subject to rotation, the internal power switch 1 is pressed by the action of an entrance ramp, while potentiometer 25 is also activated simultaneously. Following the rotary programmer 26 rotational movement, from the point where the switch 1 is pressed, will became able to turn programmer selector 26 to a maximum of 300 degrees being the output tension proportional the selector cursor. Circling the dial 26 is a graduated scale indicating the several operation modes, as well operating programmable time. From the possible operations mode, we are able to identify: OFF mode, where the lubricator is totally inactive and electrically disconnected from the battery 32; RESET mode (R), which after 5 seconds in this position the system resets elapsed time and the number of shots done; and a P mode, where the lubricator dispense on an ongoing basis until the occurrence of an alarm or inactivation of this feature. A selection range period is graduated to allow programming periods from 2 weeks to 52 weeks, with weekly increments. Potentiometer information 25 is communicated to a microcontroller 28, which processes analog reading to digital data. The microcontroller 28 is the component which performs all calculations for lubricant fluid distribution within the scheduled period, being possible also, to change operating cycle during its function and recalculate the dispense frequency considering remaining quantity of lubricant fluid in the reservoir. This device monitorize also, the value of batteries voltage 32, in order to indicate when they have low tension. Lubricant fluid outer pressure is also monitorized based on the current consumed by the electrical motor 2.

Regarding the various parameters above mentioned, the microcontroller 28 activates periodically the electric motor 2, to dispense lubricant fluid during the scheduled period. Given the mentioned variables, and through the microcontroller calculation 28, is possible to generate alarm indicators related to malfunctions, such as: tension cells 32 under to 2.4V; depleted lubricant fluid and 10 bar injection pressure. Warning signals are represented by LEDs 29 and 30.

Through the device 27 and microcontroller 28 the motor runs in both rotational directions, because, each time the engine advances the piston 10, and after this action is completed, it will perform a reverse rotational direction to retract the piston slightly 10, in order to prevent the lubricant fluid to remain on high pressure. To measure the linear advance of the piston 10, which is primarily reflected in the amount of lubricant fluid depleted, there is an optical sensor 31 which checks the number of rotation increments in the last gear 7, by counting to count through and by the shaft slots 22, which are coupled with referred gear. The movement transmission to the last gear 7 is carried out by a sequence of gears meshed 3,4,5,6,18,19,20 and 21, which transmit the rotational movement of the engine to the last gear 7, having these, appropriated features to achieve the desired final torque. In the last gear 7 exists a square hole 8, which fits with one spindle with the same shape belonging to the telescopical spindle.

All above components are housed in a support structure 23, which has at its base a number of slots, which prevent rotation between the structure 23 of the lubricant fluid reservoir 12. Using multiple grooves 23 relates to the fact that the square of the telecopical spindle shaft fit into the square hole 8, which means they will only fit in steps of 90 degrees in 90 degrees, so a system with multiple slots is necessary in order to be possible in any position from square hole 8, there is always necessary to block between 23 and 12 the rotational movement. To engage the support structure 23 to the reservoir 12, there is a capsule surrounding the 9 outer structure 23, which by screwing on the external thread 15 located on top of reservoir 12, performs the mechanical linkage between the two components.

Knowing that the electric motor 2 runs periodically controlled by the microcontroller 28, and taking into account, that the motion transmission from the engine 2 to the final gear 7 is ensured by the intermediate gears 3,4,5,6,18,19,20 and 21, means that square hole 8 will have a rotational movement transmitted to the telescopical spindle.

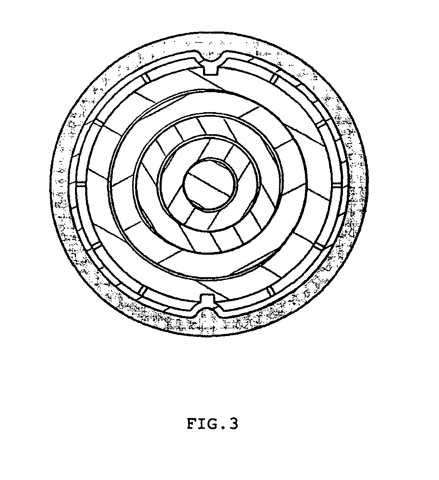

The telescopic system consists of several hollow cylinders with inner and outer thread, with the exception of the first 17, which is solid, with external thread and the last 13, which contains only internal threads. The last cylinder 13 is coupled to the piston 10, which contains an anti-rotation via alignment guides 33. The alignment guides 33, shown in Figure 3, are rounded bumps placed along the inside of the reservoir 12, in which they match the existing recesses in the piston. In this way the piston moves along the reservoir 12 guided by the alignment guides 33.

Initially all cylinders 13,14,16 and 17 are withdraw, and the piston 10 is in the top. The rotational movement is transmitted to the telescopical spindles first cylinder 17. When the first cylinder starts the movement, considering that the remaining cylinders 13,14,16 are in the initial position, and the last cylinder 13 is connected to the piston 10, which does not rotate, means that the first cylinder 17 will begin to unscrew inside of the second cylinder 16 until it reaches a travel limiter characterized by a thread discontinuity. At this point, the first and second cylinders (17 and 16) become solidarily bounded, meaning that they will run together as one, and begin to unscrew inside the third cylinder 14. This operation is repeated between all cylinders threaded till the piston 10 reaches its maximum displacement. During unscrewing process for the various cylinders 13,14,16 and 17, the piston 10 moves proportionally to the cylinders thread pitch, and the rotation speed provided by the electrical motor, divided by the gearbox ratio.

The telescopical spindle, the guide leaders 33 and the piston 10 are placed inside the reservoir, being that the piston 10 and the reservoir structure 12 form a container 34 for the lubricant fluid. By the pistons 10 compression over the lubricant fluid, the last exits through the sprue channel, and enters in the lubrication channels path.

Up until now, the telescopical spindle is referred as composed by 4 threaded cylinders. However, the applied number of cylinders of the telescopical spindle may vary, depending on the required pistons linear stroke, in order completely deplete the lubricant fluid. This versatility can also be applied to the gearboxes number of gears to achieve the desired transmission ratio. The reservoirs volume can also be modified depending on the amount of lubricant fluid desired.

## Claims

1. Automatic lubricator with piston (10) and telescopical spindle comprising a number of threaded cylinders of which:
a.a first cylinder (17) is solid and with only external threads, and is coupled to an electrical motor (2);
b. one or more intermediate cylinders (14, 16) are hollow with internal and external threads;
c.a last cylinder (13) is hollow with only internal threads, and is coupled to the piston (10);
the piston (10) comprises anti-rotation alignment guides (33) with dimensions such that to convert a rotational motion into a linear one of the piston's stroke;
the automatic lubricator further comprising a microcontroller programmed to withdraw the piston (10), after each lubricant fluid dispensing, by inversion of the electrical motor (2) rotation direction, in order to relieve the lubricant fluid from high pressure.

2. The automatic lubricator according to claim 1 comprising a rotating selector for programming the dispensing period, as well as the desirable functioning mode.

3. The automatic lubricator according to the previous claim wherein the rotating selector is for the weekly programmed values.

4. The automatic lubricator according to claim 1 wherein the microcontroller is programmed to allow the reprogramming of the functioning period and the consequent temporal redistribution of the remaining amount of lubricant fluid.

5. The automatic lubricator according to claim 1 comprising a mechanical system with a gearbox free electrical motor, and coupled gears such that to confer a specific torque to
the piston causing higher or lower pressure at the lubricant fluids exit, depending on the gears specification.

6. The automatic lubricator according to claim 1 wherein the anti-rotation alignment guides (33) comprise rounded shape guide leaders, placed along the interior of the lubricant fluid reservoir, being that the piston will have slots disposed in the same direction, in order to fit in the reservoirs interior and move linear wise, guided by the mentioned guide leaders.

## Patentansprüche

1. Die automatische Schmiervorrichtung mit Kolben (10) und teleskopischer Spindel, bestehend aus einer Anzahl von Gewindezylindern von denen:
a. ein erster Zylinder (17) fest ist, nur mit Aussengewinden und gekoppelt an einen Elektromotor (2);
b. ein oder mehrere Zwischenzylinder (14, 16) ausgehöhlt sind mit Innen- und Aussengewinden;
c. ein letzter Zylinder (13) ist ausgehöhlt mit nur Innengewinden und gekoppelt an den Kolben (10); der Kolben (10) besteht aus Anti-Drehungs Anpassungsrichtführungen (33) bemasst, um die Umdrehungsbewegung in eine geradlinige Bewegung des Kolbenhubs, umzusetzen; desweiteren enthält die automatische Schmiervorrichtung eine Mikrosteuerung, programiert um den Kolben (10) nach jeder Dosierung der Schmierflüssigkeit, zurückzuziehen und durch die Rückdrehung der Drehrichtung des Elektromotor (2), um die Schmierflüssigkeit vom Hochdruck, zu entlasten.

2. Die automatische Schmiervorrichtung, gemäss Anspruch 1, ist bestehend aus einem Drehschalter um die Dosierdauer sowie die gewünschte Betriebsart, einzuprogramieren.

3. Die automatische Schmiervorrichtung, gemäss vorherigem Anspruch, wo der Drehschalter für die wöchentlich einprogramierten Werte ist.

4. Die automatische Schmiervorrichtung, gemäss Anspruch 1, worin die Mikrosteuerung einprogramiert ist, um die reprogramierung der Funktionsdauer und folglich die zeitliche Neuverteilung der Restmenge der Schmierflüssigkeit, zu erlauben.

5. Die automatische Schmiervorrichtung, gemäss Anspruch 1, bestehend aus einem mechanischen System mit einem Getriebe frei von Elektromotor und gekoppelten Getrieberad, welches eine bestimmte Drehung an den Kolben überträgt und somit einen höheren oder niedrigeren Druck am Ausgang der Schmierflüssigkeit überträgt, abhängig von der technischen Beschreibung des Getriebes.

6. Die automatische Schmiervorrichtung, gemäss Anspruch 1, wo die Anti-Drehungs Anpassungsrichtführungen (33) Führungssäulen in gerunderter Form enthalten, entlang den Behälterinnern der Schmierflüssigkeit angelegt. Dafür wird der Kolben mit Schlitzen ausgestattet, diese sind geneigt in die selbe Richtung, um eine genaue Anpassung an den Behälterinnern und sich so auf geradlinige Weise zu bewegen, geleitet dürch die schon erwähnten Führungssäulen.

## Revendications

1. Lubrifiant automatique avec piston (10) et un axe télescopique qui est conçu par un certain nombre de cylindres filetés dont:
a. un premier cylindre (17) solide avec seulement un filetage extérieur, et couplé à un moteur électrique (2);
b. un ou plusieurs cylindres intermédiaires (14, 16) creux à filetage interne et externe;
c. un dernier cylindre (13) creux avec seulement des filets internes, et couplé au piston (10);
le piston (10) comprenant des guides d'alignement anti-rotation (33) ont des dimensions qui permette de transformer un mouvement de rotation de la course du piston en un mouvement linéaire; le lubrifiant automatique **caractérisé en ce qu'**un microcontrôleur est programmé pour rétracter le piston (10), après chaque distribution de fluide lubrifiant, par inversion du sens de rotation du moteur électrique (2), afin de soulager le fluide lubrifiant soumis à une pression élevée.

2. Le lubrifiant automatique selon la revendication 1, **caractérisée en ce qu'**un sélecteur rotatif détermine la programmation de la période de distribution, ainsi que le mode de fonctionnement souhaitable.

3. Le lubrifiant automatique selon la revendication précédente, **caractérisée en ce que** le sélecteur rotatif programme des horaires hebdomadaires.

4. Le lubrifiant automatique selon la revendication 1, **caractérisée en ce que** le microcontrôleur est programmé pour permettre la reprogrammation de la période de fonctionnement et par conséquent la redistribution temporelle de la quantité restante de fluide lubrifiant.

5. Le lubrifiant automatique selon la revendication 1, **caractérisée en ce que** le système mécanique comprenant un moteur réducteur électrique libre et des engrenages accouplés sont de tel sorte que ces dernières confèrent un couple spécifique au piston provoquant une pression supérieure ou inférieure à la sortie de lubrifiant, en fonction de les spécificités des engrenages.

6. Le lubrifiant automatique selon la revendication 1, **caractérisée en ce que** les guides d'alignement anti-rotation (33) comprennent guides conducteurs arrondis, placé internement au long du réservoir de fluide lubrifiant, et le piston possède des rainures disposées dans la même direction adaptées à l'intérieur des réservoir, en permettant un déplacement linéaire, guidé par les guides conducteurs mentionné.
